# EUROPEAN PATENT APPLICATION

(11) **EP 1 845 110 A1**
(43) Date of publication of application: **17.10.2007**
(21) Application number: 06112660.3
(22) Date of filing: 13.04.2006
(51) Int. Cl.: C08F 4/22, C08F 4/16, C08F 10/02

(54) **Chromium-based catalysts**

(71) Applicant: TOTAL PETROCHEMICALS RESEARCH FELUY, 7181 Seneffe (Feluy) (BE)
(72) Inventor: Bodart, Philippe, B-4480, Clermont sous Huy (ENGIS) (BE); Debras, Guy, B-6210, Frasnes-les-Gosselies (BE); Dams, Mieke, B-2440, Geel (BE)
(74) Representative: Leyder, Francis

(57) **Abstract**

The present invention provides a process for preparing a supported chromium-based catalyst for the production of polyethylene comprising the steps of a) providing a silica-based support having a specific surface area of at least 250 m²/g and of less than 400 m²/g; b) depositing a chromium compound on the support to form a chromium-based catalyst, provided that the ratio of the specific surface area of the support to chromium is at least 50000 m²/g Cr; c) dehydrating the product of step b) to remove physically adsorbed water by heating at a temperature of at least 250°C in an atmosphere of dry, inert gas; and d) titanating the product of step c) at a temperature of at least 250°C in an atmosphere of dry and inert gas containing at least one titanium compound of the general formula selected from RₙTi(OR')ₘ, (RO)ₙTi(OR')ₘ and mixtures thereof, wherein R and R' are the same or different hydrocarbyl groups containing from 1 to 12 carbon atoms, and wherein n is 0 to 3, m is 1 to 4 and m+n equals 4, to form a titanated chromium-based catalyst having a ratio of specific surface area of the support to titanium content of the titanated catalyst ranging from 5000 to 20000 m²/g Ti.

## Description

### FIELD OF THE INVENTION

The present invention relates to a chromium-based catalyst for producing polyethylene and to a method for preparing polyethylene using a chromium-based catalyst. The present invention further relates to a product obtained with said catalyst.

### BACKGROUND AND OBJECTS OF THE INVENTION

For polyethylene, and for high-density polyethylene (HDPE) in particular, the molecular weight distribution (MWD) is a fundamental property that partially determines the properties of the polymer, and thus its applications. It is generally recognised in the art that the molecular weight distribution of a polyethylene resin can determine the mechanical properties of the resin and that the provision of different molecular weight polyethylene molecules can significantly affect the rheological properties of the polyethylene as a whole.

In this description, by polyethylene it is meant both homopolymers of ethylene and copolymers of ethylene and an alpha-olefinic comonomer comprising 3 to 10 carbon atoms. High-density polyethylene means polyethylene resins that have a density of about 0.941-0.965 g/cm³, and medium-density polyethylene means polyethylene resins that have a density of about 0.926-0.940 g/cm³. By polymerisation, it is meant both homo- and copolymerisation of ethylene.

The molecular weight distribution can be defined by means of a curve obtained by gel permeation chromatography. Generally, the molecular weight distribution (MWD) is more simply defined by a parameter, known as the dispersion index D, which is the ratio between the average molecular weight by weight (Mw) and the average molecular weight by number (Mn). The dispersion index constitutes a measure of the width of the molecular weight distribution.

Since an increase in the molecular weight normally improves some of the physical properties of polyethylene resins, there is a strong demand for polyethylene having high molecular weight. High molecular weight molecules however render the polymer more difficult to process. On the other hand, a broadening in the molecular weight distribution tends to improve the flow of the polymer when it is being processed at high shear rates. Accordingly, in applications requiring a rapid transformation of the material through a die, for example in blowing and extrusion techniques, the broadening of the molecular weight distribution permits an improvement in the processing of polyethylene at high molecular weight (high molecular weight polyethylenes have a low melt index, as is known in the art). It is known that when the polyethylene has a high molecular weight and also a broad molecular weight distribution, the processing of the polyethylene is made easier as a result of the low molecular weight portion while the high molecular weight portion contributes to good mechanical properties for the polyethylene resin. A polyethylene of this type may be processed using less energy with higher processing yields.

As a general rule, a polyethylene having a high density tends to have a high degree of stiffness. In general, however, the environment stress crack resistance (ESCR) of polyethylene has an inverse relationship with stiffness. In other words, as the stiffness of polyethylene is increased, the environment stress crack resistance is decreased, and vice versa. This inverse relationship is known in the art as the ESCR-rigidity balance. It is required, for certain applications, to achieve a compromise between the environmental stress crack resistance and the rigidity of the polyethylene.

Polyethylene is well known in the art for use in making various finished goods, especially moulded products, such as bottles or containers.

A variety of catalyst systems are known for the manufacture of polyethylene. It is known in the art that the mechanical properties of a polyethylene resin vary depending on what catalyst system was employed to produce the polyethylene. One of the reasons is that different catalyst systems tend to yield different molecular weight distributions in the polyethylene produced. Thus for example the properties of a polyethylene resin produced using a chromium oxide-based catalyst (i.e. a catalyst known in the art as a "Phillips-type catalyst") are different from the properties of a product employed using a Ziegler-Natta catalyst.

While chromium-based catalysts have been known since the 1950's, different attempts have been made to improve them. In order to improve either the mechanical properties or the melt index of the polyethylene products, it has been proposed to add titanium as a promoter to a chromium-based catalyst. US 4,184,979 discloses that titanium can be incorporated into a catalytic composition by adding to a chromium-based catalyst, which has been heated in a dry inert gas, a titanium compound such as titanium tetraisopropoxide. The titanated catalyst is then activated at elevated temperature. The ethylene polymers obtained with this process do however not have satisfactory mechanical properties especially with regard to the environmental stress crack resistance (ESCR).

In EP 882 443, a titanated catalyst providing polyethylene is obtained by providing a silica support having a specific surface area of at least 400 m²/g, depositing a chromium compound, dehydrating at a temperature of at least 300°C in an atmosphere of dry inert gas, titanating the chromium-based catalyst at a temperature of at least 300°C in an atmosphere of dry and inert gas containing a titanium compound of the general formula selected from Ti(OR)₄ to form a titanated chromium-based catalyst having a titanium content of from 1 to 5 wt-%, based on the weight of the titanated catalyst and activating the titanated catalyst at a temperature of from 500 to 900°C. Emphasis was put on the titanation procedure and on the use of a high surface area (of at least 400 m²/g). The exemplified chromium content of the catalyst was typically set at about 1 wt-%.

Although EP 882 443 provides a catalyst to manufacture a resin with good ESCR and/or tear stress compared to other prior art documents, the use of said catalyst however leads to a rather low melt index potential, which results in reduced polymerisation unit operability, and sometimes limits the resin processability. In addition, if such a catalyst is operated in a gas phase process, where lower chromium content has to be used in order to avoid excessive reaction rates and run away during polymerisation, the problem is that the melt index is further reduced, down to an unacceptable level.

There is therefore a need to further improve the catalyst operability while maintaining or improving the resin properties.

The present invention aims at alleviating at least some of these drawbacks while still producing high or medium density polyethylene with good environmental stress crack resistance (ESCR), high impact resistance and good processability.

### SUMMARY OF THE INVENTION

The applicants have found that at least some of these drawbacks can be alleviated by combining the use of a catalyst with a relatively low specific surface area/chromium content ratio, using titanation under specific conditions to attain a given support surface area/final titanium content and using elevated activation temperatures.

The present invention thus provides a process for preparing a supported chromium-based catalyst for the production of polyethylene comprising the steps of
a) providing a silica-based support having a specific surface area of at least 250 m²/g and of less than 400 m²/g;
b) depositing a chromium compound on the support to form a chromium-based catalyst, the ratio of the specific surface area of the support to chromium being at least 50000 m²/g Cr;
c) dehydrating the product of step b) to remove physically adsorbed water by heating at a temperature of at least 250°C in an atmosphere of dry and inert gas; and
d) titanating the product of step c) at a temperature of at least 250°C in an atmosphere of dry and inert gas containing at least one titanium compound of the general formula selected from RₙTi(OR')ₘ, (RO)ₙTi(OR')ₘ and mixtures thereof, wherein R and R' are the same or different hydrocarbyl groups containing from 1 to 12 carbon atoms, and wherein m is 1 to 4 and m+n equals 4, to form a titanated chromium-based catalyst having a ratio of specific surface area of the support to titanium content of the titanated catalyst ranging from 5000 to 20000 m²/g Ti.

The present invention further provides a chromium-based catalyst for the production of polyethylene, comprising a silica-based support having a specific surface area of at least 250 m²/g and of less than 400 m²/g, a chromium compound deposited on the support, a ratio of the specific surface area of the support to chromium content of the catalyst of at least 50000 m²/g, and a titanium compound deposited on the support to obtain a ratio of the specific surface area of the support to titanium content of the catalyst of 5000 to 20000 m²/g Ti. Said catalyst is obtainable according to the process of the present invention.

The present invention also provides a process for preparing polyethylene by polymerising ethylene, or copolymerising ethylene and an alpha-olefinic comonomer comprising 3 to 10 carbon atoms, in the presence of a chromium-based catalyst comprising a silica-based support having a specific surface area of at least 250 m²/g and less than 400 m²/g, a chromium compound deposited on the support, a ratio of the specific surface area of the support to chromium content of the catalyst of at least 50000 m²/g, and a titanium compound deposited on the support to obtain a ratio of the specific surface area of the support to the titanium content of the titanated catalyst of 5000 to 20000 m²/g Ti.

The present invention also provides a polyethylene homopolymer or a copolymer of ethylene and an alpha-olefinic comonomer comprising 3 to 10 carbon atoms, obtainable according to the process of the present invention.

The present invention further provides a use of a chromium-based catalyst obtainable by the process according to the present invention, for producing a polyethylene having high environmental stress crack resistance and low melt fracture index, by polymerising ethylene, or copolymerising ethylene and an alpha-olefinic comonomer comprising 3 to 10 carbon atoms.

The present invention still further provides a use of a chromium-based catalyst obtainable by the process according to the present invention for increasing the impact resistance of moulded articles made from polyethylene resins obtained by polymerising ethylene, or copolymerising ethylene and an alpha-olefin comonomer comprising 3 to 10 carbon atoms, in the presence of said catalyst.

### DETAILED DESCRIPTION OF THE INVENTION

The present invention relates to a process for preparing a supported chromium-based catalyst for the production of polyethylene comprising the steps described in claim 1.

It has thus been found that the manufacturing process according to the present invention allows the preparation of a catalyst, which, when used in the polymerisation of ethylene, leads to a polyethylene having an unexpected combination of good properties, especially for blow moulding applications.

Indeed, the inventors have found that, in the production of polyethylene resins, a particular chromium-based catalyst having a moderate specific surface area support, which has been dehydrated and the surface titanated prior to or during the process of the activation of the catalyst at elevated temperatures, can unexpectedly yield polyethylene having high impact and/or environmental stress crack resistance.

According to an embodiment of the invention, the process further comprises a step e) consisting of activating the product of step d) at a temperature of from 500 to 700°C.

Suitable supports used in this invention consist of amorphous silica having a surface area of at least 250 m²/g, preferably of at least 280 m²/g, and less than 400 m²/g, preferably less than 380 m²/g and more preferably less than 350 m²/g, including said values. The specific surface area is measured by N₂ adsorption using the well-known BET technique. In a previous application, EP 882 443, it had been assumed that a high surface area of at least 400 m²/g was a prerequisite for obtaining polyethylene with good properties. Moreover, compared to the previous system, the catalyst according to the present invention has an improved melt index potential for the resulting resin although activation temperature is kept below 700°C and it also retains sufficient activity. This broadens the polymerisation conditions thus reducing constraints in the production process of polyethylene, while keeping an acceptable melt index for processability.

The support can have a pore volume of 1 cm³/g to 3 cm³/g. Supports with a pore volume of 1.3 - 2.0 cm³/g are preferred. Pore volume is measured by N₂ desorption using the BJH method for pores with a diameter of less than 1000Å. Supports with too small porosity result in a loss of melt index potential and in lower activity. Supports with a pore volume of over 2.5 cm³/g or even with a pore volume of over 2.0 cm³/g are less desirable because they require special expensive preparation steps (e.g. azeotropic drying) during their synthesis or subsequent modification with chromium compounds. In addition, because they are usually more sensitive to attrition during catalyst handling, activation or use in polymerisation, these supports often lead to more polymer fines production, which is detrimental in an industrial process.

The silica-based support can be prepared by various known techniques such as but not limited to gelification, precipitation and/or spray-drying. Usually, average particle size D50 is from 20 µm, preferably from 30 µm and more preferably from 35 µm, up to 150 µm, preferably up to 100 µm and most preferably up to 70 µm. D50 is defined as a particle diameter, with 50 wt-% of particles having a smaller diameter and 50 wt-% of particles having a larger diameter. Average particle size D90 is up to 200 µm, preferably up to 150 µm, most preferably up to 110 µm. D90 is defined as a particle diameter, with 90 wt-% of particles having a smaller diameter and 10 wt-% of particles having a larger diameter. Average particle size D10 is at least 5 µm, preferably at least 10 µm. D10 is defined as a particle diameter, with 10 wt-% of particles having a smaller diameter and 90 wt-% of particles having a larger diameter. Particle size distribution is determined using light diffraction granulometry, for example, using the Malvern Mastersizer 2000. The particle morphology is preferably microspheroidal to favour fluidisation and to reduce attrition.

Prior to use for catalyst synthesis, the support is dried by heating or predrying under an inert gas, in a manner known to those skilled in the art, e.g. at about 200°C for from 8 to 16 hours under nitrogen or other suitable gas.

Known chromium-containing compounds capable of reacting with the surface hydroxyl groups of the silica-based supports can be used for deposition of chromium on said support. Examples of such compounds include chromium nitrate, chromium(III)acetate, chromium(III)acetylacetonate, chromium trioxide, chromate esters such as t-butyl chromate, silyl chromate esters and phosphorous-containing esters, and mixtures thereof. Preferably, chromium acetate, chromium acetylacetonate or chromium trioxide is used.

The chromium content of the chromium-based catalyst is chosen to get a ratio of the specific surface area of the support to chromium of at least 50000 m²/g chromium, preferably from 50000 or 55000 m²/g chromium, up to 75000, 100000 or 200000 m²/g chromium. Thus, there is at most 1 g of chromium per 50000 m² of specific surface area of the support.

The chromium-based catalyst can be prepared by dry mixing or non-aqueous impregnation but is preferably prepared by impregnation of silica with an aqueous solution of a soluble chromium compound such as chromium acetate, chromium acetylacetonate or chromium trioxide.

The supported chromium-based catalyst may be subjected to a pre-treatment in order to dehydrate it and drive off physically adsorbed water from the silica or silica-based support. The removal of physically adsorbed water can help to avoid the formation of crystalline TiO₂ as a product from the reaction of water with the titanium compound subsequently introduced during the titanation procedure, as described below. The dehydration step is preferably carried out by heating the catalyst to a temperature of at least 250°C and preferably of at least 270°C, in a fluidised bed and in a dry inert atmosphere of, for example, nitrogen. The dehydration step is preferably carried out for 0.5 to 2 hours.

In a next step, the supported chromium-based catalyst is loaded with one or more titanium compounds. The titanium compounds may be of the formula RnTi(OR')ₘ, (RO)ₙ Ti(OR')ₘ and mixtures thereof, wherein R and R' are the same or different hydrocarbyl groups containing 1 to 12 carbon atoms, and wherein m is 1, 2, 3 or 4 and m+n equals 4. Preferably, the titanium compounds are titanium tetraalkoxides Ti(OR')₄ wherein each R' is the same or different and can be an alkyl or cycloalkyl group each having from 3 to 5 carbon atoms. Mixtures of these compounds can also be used. The titanation is preferably performed by progressively introducing the titanium compound into a stream of a dry and inert non-oxidizing atmosphere. In the titanation step, the temperature is maintained at at least 250°C, and preferably at at least 270°C. The titanium compound can be pumped as a liquid into the reaction zone where it vaporizes.

This titanation step is controlled so that the ratio of the specific surface area of the support to titanium content of the resultant catalyst is from 5000 to 20000 m²/g Ti, and preferably from 5000, 6500, 7500 or 9000 m²/g Ti, up to 12000, 15000 or 20000 m²/g Ti. The total amount of titanium compound introduced into the gas stream is calculated in order to obtain the required titanium content in the resultant catalyst and the progressive flow rate of the titanium compound is adjusted in order to provide a titanation reaction period of 0.5 to 2 hours.

After the introduction of the titanium compound, the catalyst can be flushed under a gas stream for a period of typically 0.75 to 2 hours. The dehydration and titanation steps are preferably performed in the vapour phase in a fluidised bed.

The titanated catalyst can then be subjected to an activation step in dry air at an elevated activation temperature for at least 2 hours, preferably for at least 4 hours. The activation temperature can range from 500°C or 525 °C, up to 600°C, 650°C or 700°C. The atmosphere can be changed from nitrogen to air, either progressively or instantly, and the temperature can be progressively increased, from the titanation step to the activation step.

The present invention also relates to a chromium-based catalyst for the production of polyethylene, comprising a silica-based support having a specific surface area of at least 250 m²/g and of less than 400 m²/g, a chromium compound deposited on the support, a ratio of the specific surface area of the support to chromium content of the catalyst of at least 50000 m²/g, and a titanium compound deposited on the support to obtain a ratio of the specific surface area of the support to titanium content of the catalyst of 6500 to 15000 m²/g Ti. Said catalyst is obtainable according to a process of the present invention.

The details and embodiments mentioned above in connection with the process for manufacturing the catalyst also apply with respect to the catalyst according to the present invention.

The invention yet further relates to method for preparing polyethylene by polymerising ethylene, or copolymerising ethylene and an alpha-olefinic comonomer comprising 3 to 10 carbon atoms, in the presence of a chromium-based catalyst comprising a silica-based support having a specific surface area of at least 250 m²/g and lower than 400 m²/g, a chromium compound deposited on the support, a ratio of the specific surface area of the support to chromium content of the catalyst of at least 50000 m²/g, and a titanium compound deposited on the support to obtain a ratio of the specific surface area of the support to the titanium content of the titanated catalyst of 6500 to 15000 m²/g Ti, said catalyst being obtainable according to a process of the present invention.

The details and embodiments mentioned above in connection with the process for manufacturing the catalyst also apply with respect to the polymerisation method according to the present invention.

The ethylene polymerisation or copolymerisation method of the present invention is preferably carried out in the liquid phase (slurry process) or in the gas phase.

In a liquid slurry process, the liquid comprises ethylene, and where required one or more alpha-olefinic comonomer comprising from 3 to 10 carbon atoms, in an inert diluent. The comonomer may be selected from 1-butene, 1-hexene, 4-methyl 1-pentene, 1-heptene and 1-octene. The inert diluent is preferably isobutane. The polymerisation process is typically carried out at a polymerisation temperature of from 85 to 110°C and at a pressure of at least 20 bars. Preferably, the temperature ranges from 95 to 110°C and the pressure is at least 40 bars, more preferably from 40 to 42 bars to produce polymer resins with high environmental stress crack resistance (ESCR). Other compounds such as a metal alkyl or hydrogen may be introduced into the polymerisation reaction to regulate activity and polymer properties such as melt flow index. In one preferred process of the present invention, the polymerisation or copolymerisation process is carried out in a liquid-full loop reactor.

The method of the invention is particularly suited for gas phase polymerisation. The gas phase polymerisation can be performed in one or more fluidised bed or agitated bed reactors. The gas phase comprises ethylene, if required an alpha-olefinic comonomer comprising 3 to 10 carbon atoms, such as 1-butene, 1-hexene, 4-methyl-1-pentene, 1-octene or mixture thereof and an inert gas such as nitrogen. Optionally a metal alkyl can also be injected in the polymerisation medium as well as one or more other reaction-controlling agents, for example, hydrogen. Reactor temperature can be adjusted between 90 and 115°C, more preferably between 95 and 112°C (Report 1: Technology and Economic Evaluation, Chem Systems, January 1998). Optionally a hydrocarbon diluent such as pentane, isopentane, hexane, isohexane, cyclohexane or mixtures thereof can be used if the gas phase unit is run in the so-called condensing or super-condensing mode.

The titanated chromium-based catalyst is introduced into the polymerisation reactor. The alkylene monomers, and comonomer if present, are fed into the polymerisation reactor. The polyethylene obtained with the catalyst of this invention has a broad molecular weight distribution (MWD) that is represented by the dispersion index D of typically from 12 to 23, more typically of 14-22 and a density typically from 0.930 or from 0.934 g/cm³, up to 0.960 g/cm³. Although the molecular weight distribution is very broad, the shear resistance (SR) is quite limited (SR is defined as HLMI/MI2 where HLMI is the high load melt index measured at 190°C and under a load of 21.6 kg and MI₂ is the melt index measured at 190°C under a load of 2.16 kg, both with the ASTM D-1238 standard method). Nonetheless, the polyethylene exhibits good resistance to melt fracture when processed into bottles. The polyethylene obtained with the catalyst of this invention has high environmental stress crack resistance (ESCR) and very high impact resistance.

The present invention also provides an ethylene homopolymer or a copolymer of ethylene and an alpha-olefinic comonomer comprising 3 to 10 carbon atoms, obtainable according to the method of the present invention. The invention also relates to a polyethylene homopolymer or a copolymer of ethylene and an alpha-olefinic comonomer comprising 3 to 10 carbon atoms, obtainable by polymerising ethylene, or copolymerising ethylene and an alpha-olefin comonomer comprising 3 to 10 carbon atoms, in the presence of a catalyst according to the present invention. The polyethylene can be for example high density polyethylene or medium density polyethylene. According to a preferred embodiment, the polyethylene is a semi high molecular weight polyethylene, i.e. with an HLMI ranging from 5 to 12 g/10 min. The polyethylene of the present invention can also be a blow moulding grade with an HLMI of 15 to 30 g/10 min. The polyethylene can also be a grade for blown film, more specifically medium density film grade with a density of 0.934 to 0.945 g/cm³.

The present invention also relates to a use of a chromium-based catalyst according to the present invention, for producing a polyethylene having high environmental stress crack resistance and low melt fracture index, by polymerising ethylene, or copolymerising ethylene and an alpha-olefinic comonomer comprising 3 to 10 carbon atoms. The polyethylene produced according to the present invention thus has a high environmental stress crack resistance and a low incidence of melt fracture when melted and subjected to rotational shear at varying speeds. It is therefore especially suitable for use in blow moulded bottles or containers, as well as any other use where such properties are required or preferred.

The present invention moreover relates to a use of a chromium-based catalyst according to the present invention for increasing the impact resistance of moulded articles made from polyethylene resins obtained by polymerising ethylene, or copolymerising ethylene and an alpha-olefin comonomer comprising 3 to 10 carbon atoms, in the presence of the present catalyst.

The details and embodiments mentioned above in connection with the process for manufacturing the catalyst also apply with respect to the uses according to the present invention. In said uses, the catalyst can also be obtainable according to the process of the present invention.

The invention also relates to blow moulded articles manufactured from an ethylene homopolymer or copolymer, obtainable by polymerising ethylene or copolymerising ethylene and an alpha-olefinic comonomer comprising 3 to 10 carbon atoms, in the presence of a chromium-based catalyst obtainable according to the present invention.

The following Examples are given to illustrate the invention without limiting its scope.

### EXPERIMENTAL PART

### Initial chromium-silica catalysts

Catalyst A was obtained by deposition of about 0.5 wt-% chromium (Cr) on a microspheroidal silica support. The chromium source was Cr(III)acetate. Impregnation with Cr-acetate was performed by incipient wetness impregnation, using an aqueous solution of the Cr-salt. This is typical of all the catalysts below.

This catalyst was thus a Cr-silica catalyst. Main properties were: surface area (SA) = 306 m²/g, pore volume = 1.53 ml/g, Cr content = 0.51 wt-%. The ratio surface area/Cr = 60000 m²/g Cr.

Catalyst B was similar to catalyst A, but its surface area was 315 m²/g, pore volume = 1.44 ml/g, Cr-content = 0.51 wt-%. The ratio surface area/Cr = 61760 m²/g Cr.

Catalyst C was again similar to catalyst A but its surface area was 301 m²/g, pore volume = 1.34 ml/g, Cr-content = 0.23 wt-%. The ratio surface area/Cr = 130870 m²/g Cr.

Catalyst D was a Cr-silica catalyst on a granular silica support. Its surface area was 319 m²/g, pore volume = 1.57 ml/g, Cr-content = 1.06 wt-%. The ratio surface area/Cr = 30000 m²/g Cr.

Catalyst E was close to catalyst A, except that the silica support was characterised by a high surface area. The main properties were surface area = 461 m²/g, pore volume = 1.27 ml/g, Cr-content = 0.26 wt-%. The ratio surface area/Cr = 177310 m²/g Cr.

Catalyst F was close to catalyst D with higher Cr loading. Surface area = 466 m²/g, pore volume =1.3 ml/g, Cr-content = 0.41 wt-%. The ratio surface area/Cr = 113660 m²/g Cr.

Catalyst G was also similar to catalyst A, but from another batch. The surface area was 317 m²/g, pore volume = 1.46 ml/g, Cr-content = 0.53 wt-%. The ratio surface area/Cr = 59800 m²/g Cr.

Catalyst H was similar to catalyst A, but from another batch. The surface area was 301 m²/g, pore volume = 1.53 ml/g, Cr-content = 0.56 wt-%. The ratio surface area/Cr = 53750 m²/g Cr. D50 = 46 µm, D10 = 13 µm, D90 = 88 µm. Fines content (d < 31 µm) was about 25 wt%.

### Titanation of chromium-silica catalysts

### Labscale titanation and activation of chromium catalysts

A series of titanated chromium-silica catalysts (Ti-Cr-Si-catalyst) were prepared using the chromium-silica materials described above and using the following procedure.

The support impregnated with the chromium-compound was introduced in an activator vessel incorporating a fluidised bed, flushed under nitrogen and the temperature was raised from room temperature to 300°C. The dehydration step was carried out at this temperature for 2 hours. After this dehydration step, liquid titanium tetraisopropoxide (TYZOR® TPT), stored under anhydrous nitrogen, was progressively introduced in the lower part of the fluidised bed in the activator vessel. The amount of titanium isopropoxide was calculated in order to get the required titanium content in the resultant catalyst. The flow thereof was adjusted to complete the addition in about 30 minutes. After the injection was completed, the catalyst was flushed with nitrogen for about 2 hours. Nitrogen was then replaced by air and the temperature was raised to the desired activation temperature. In the activation step, the titanium containing catalyst was maintained at the desired activation temperature for 6 hours. Then, the temperature was progressively decreased to 350°C. At 350°C, the gas flow was switched to nitrogen for further cooling to room temperature. At room temperature, the catalyst was kept under dry inert atmosphere. Two small scale activators were used, one able to handle 1 kg of catalyst powder, and one able to handle 50 g of catalyst powder.

### Industrial scale titanation and activation of Cr-catalysts

The starting catalyst was activated in an industrial fluidised bed activator according to the following procedure:
- about 200 kg of the starting solid was introduced in a fluidised bed activator;
- the starting solid was heated up to 120°C and then to 270°C in 3 hours under nitrogen and maintained at this temperature for about 2 hours;
- about 41 - 45 kg of titanium tetraisopropoxide (available under the trade name TYZOR® TPT) were progressively injected in the fluidised bed (over 2 hours);
- the obtained titanated catalyst was further maintained at 270°C under nitrogen flow for 2 hours;
- nitrogen was replaced by air and the titanated catalyst was heated up to 550°C and maintained at 550°C for 6 hours;
- the activated catalyst was cooled down to 350°C under air and then to room temperature under nitrogen;
- the activated catalyst was unloaded under nitrogen and kept under inert atmosphere prior to further use in polymerisation.

### Bench scale Polymerisations

A series of polymerisation experiments were carried out in bench scale to evaluate the potential of the different catalysts.

Testing was performed in suspension in isobutane, in slurry mode. The reactor was a 5-litre volume autoclave type with an agitator and a double wall. Hot water was passed through the double wall to control the internal temperature. The activated catalyst was introduced in the dry, clean autoclave, under nitrogen. 2 litres of liquid isobutane used as diluent was then introduced in the autoclave and the temperature was raised to the desired value. Gaseous ethylene (C2) was introduced into the reaction vessel. Ethylene pressure was adjusted to maintain a constant ethylene concentration in the liquid phase, typically 6 wt-%. Overall pressure was maintained constant by introducing fresh ethylene in the reactor. If required, 1-hexene (C6) comonomer could be used to change the density of the polymer. One shot of 1-hexene was introduced at the start of the reaction. All the polymerisations were carried out under stirring to get a homogeneous mixing. After polymerisation was complete, the reactor was vented off and cooled down to room temperature. The powder was then dried in a vacuum oven to eliminate the residual monomers and isobutane prior to further processing (stabilization, extrusion, characterisation).

### Industrial scale Polymerisation

Industrial polymerisation trials were performed in a fluidised bed reactor. The polymerisation conditions are detailed in the corresponding examples.

### Characterisation of the polymers

The polymers obtained in the Examples and Comparative examples were tested with different methods.

The melt index of the polymers was measured according to the standard ASTM D 1238. MI2 corresponds to a measure at 190°C under a load of 2.16 kg. HLMI corresponds to a measure at 190°C under a load of 21.6 kg and the results are given in g/10 minutes. Shear ratio SR2 was calculated as HLMI/MI2.

The density was measured according to the standard ASTM D1505-85 and given in g/cm3.

The number average molecular weight Mn, the weight average molecular weight Mw and the z-average molecular weight Mz were measured by gel permeation chromatography Waters S.A. GPC2000 gel permeation chromatograph. The chromatograph had been calibrated on a broad standard. Three columns were used, two Shodex AT-806MS columns from Showa Denko and one Styrogel HT6E column from Waters. The injection temperature was 145 °C, the injection volume was about comprising 1000 ppm of stabiliser butylhydroxytoluene (BHT). The sample was prepared by mixing 10-15 g of polyethylene with 10-15 ml of 1,2,4-trichlorobenzene (TCB) comprising BHT during 1 hour at 155 °C. The mixture was filtered on a membrane of 0.50 µm and the concentration of the solution was 0.1 % in room temperature.

The detector used was refractory indexer and the results were treated with the program Empower of Waters S.A. The results are given in kDa. The molecular weight distribution MWD, or more simply defined by a parameter known as the dispersion index D, was calculated as the ratio of Mw and Mn. A value of SR2/MWD is also given and it gives an estimation of the long chain branching (LCB), that is, a higher SR2/MWD corresponds to a higher long chain branching content.

Environmental stress cracking resistance ESCR was measured according to the conditions described in the standard ASTM D 1693, conditions "B", as recommended for PE with densities higher than 0.925g/cm³. The ESCR tests are tests that are currently carried out in order to check the resistance of polyethylene to crack propagation when in contact with various chemical products.

The conditions of test were chosen in order to accelerate the mechanism of crack propagation: the test was carried out at 50°C, the surfactant was Igepal CO 630, also named "Antarox", and the surfactant was used in pure form (100 %). The material to be tested was compression moulded into plates, out of which 10 specimens were punched out. The specimens were notched, bent and placed in contact with a surfactant at the test temperature. The test was therefore carried out at constant strain. The samples were visually checked twice a day to detect the appearance of any cracks on the specimens. When cracks had been detected on all specimens, the F50 time was calculated (time after which 50 % of the specimens are considered as "broken"). The results are thus given in hours.

Melt fracture is a flow instability phenomenon occurring during extrusion of thermoplastic polymers at the fabrication surface/polymer melt boundary. The occurrence of melt fracture produces severe surface irregularities in the extrudate as it emerges from the orifice. The naked eye detects this surface roughness in the melt-fractured sample as a frosty appearance or matte finish as opposed to an extrudate without melt fracture that appears clear. In this description, melt fracture was estimated from Gottfert measurement of shear viscosity over a range of shear rates typical of those found in the process die.

The measurements were carried out at a temperature of 210°C with a die 10 mm in length and 1 mm in diameter. The shear rates were 750 s-1, 725 s-1, 700 s-1, 650 s-1, 600 s-1, 500 s-1, 400 s-1 and 300 s-1. The evaluation of melt fracture was made visually.

The Charpy impact resistance was determined according to the standard ASTM D-5045-91 a. The method consisted in determining the resistance to impact by a V-shaped hammer (5.154 kg, Charpy ISO) falling on a normalised test specimen in normalised conditions, from a certain height. The test specimens were notched on Notchvis and with a razor blade a slight pressure was applied at the bottom of the notch in order to create the beginning of a fracture. The Charpy impact resistance was measured at two different temperatures, namely +23°C and -30°C. The results are given in average resilience (kJ/m²). The standard deviation (StdDev) of the resilience is also given.

### EXAMPLE 1

Catalyst A was used for polymerisation of ethylene in bench scale. Titanation was performed in small scale as stated above (1 kg catalyst powder). Ti concentration was 2.8 wt-%. Final activation step was carried out at a temperature of 550°C. The activated catalyst was tested in a bench scale reactor as described above.

The test conditions and the resin properties are presented in Table 1. Target productivity was 1000 g polymer/g catalyst. Runs 1A and 1B were conducted at 98°C and 102°C, respectively.

### EXAMPLE 2

In Example 2, two batches of activated catalyst A were prepared. Final Ti-concentration was 3.0 and 2.8 wt-%, respectively, and activation temperature was increased to 575°C and 600°C respectively. Activation was run in the same equipment as in Example 1. Polymerisation was performed under the same conditions as in Example 1, at temperature 98°C. The data is shown in Table 1.

### EXAMPLE 3

Example 3 was carried out using the same starting material as in Examples 1 and 2. Activation was performed using the same activator as in Examples 1 and 2. However, Ti content of the activated catalyst was raised to 3.7 and 3.8 wt-%, respectively.

The polymerisation was performed under the same conditions as in Examples 1 and 2, the temperature being fixed at 98°C. The data is presented in Table 1.

**Table 1**

| **EXAMPLE** | 1A | 1B | 2A | 2B | 3A | 3B |
|---|---|---|---|---|---|---|
| Catalyst type | A | A | A | A | A | A |
| Surface area starting catalyst (m²/g) | 306 | 306 | 306 | 306 | 306 | 306 |
| Pore volume (ml/g) | 1,53 | 1,53 | 1,53 | 1,53 | 1,53 | 1,53 |
| Cr-content (wt-%) | 0,51 | 0,51 | 0,51 | 0,51 | 0,51 | 0,51 |
| Ti-concentration after activation (wt-%) | 2,8 | 2,8 | 3,05 | 2,75 | 3,73 | 3,82 |
| Activation temperature (°C) | 550 | 550 | 575 | 600 | 550 | 600 |
| SA/Cr (m²/g Cr) | 60000 | 60000 | 60000 | 60000 | 60000 | 60000 |
| SA/Ti (m²/g Ti) | 10929 | 10929 | 10033 | 11127 | 8204 | 8010 |

| **Polymerisation conditions** | | | | | | |
|---|---|---|---|---|---|---|
| Ethylene (wt-%) | 6 | 6 | 6 | 6 | 6 | 6 |
| 1-hexene (wt-%) | 0,4 | 0,4 | 0,4 | 0,4 | 0,4 | 0,4 |
| Polymerisation temperature (°C) | 98 | 102 | 98 | 98 | 98 | 98 |
| Productivity (g/g) | 994 | 976 | 975 | 959 | 958 | 982 |
| Hourly productivity (g/g/h) | 1657 | 1195 | 1828 | 2055 | 2298 | 2455 |

| **Polyethylene properties** | | | | | | |
|---|---|---|---|---|---|---|
| MI2 (g/10min) | 0,12 | 0,20 | 0,17 | 0,25 | 0,32 | 0,34 |
| HLMI (g/10min) | 13,9 | 20,6 | 20,5 | 27,4 | 38,4 | 38,4 |
| SR2 (HLMI/MI2) | 120 | 101 | 123 | 112 | 122 | 112 |
| Density (g/cm³) | 0,956 | 0,957 | 0,957 | 0,958 | 0,959 | 0,956 |

| **GPC** | | | | | | |
|---|---|---|---|---|---|---|
| Mn (kDa) | 10,3 | 10,7 | 10,6 | 10,9 | 9,3 | 10,0 |
| Mw(kDa) | 236,6 | 238,6 | 207,2 | 190,8 | 194,7 | 182,7 |
| Mz(kDa) | 3079 | 3209 | 2526 | 2436 | 2618 | 2592 |
| MWD(Mw/Mn) | 23 | 22,3 | 19,5 | 17,6 | 20,9 | 18,3 |
| SR2/MWD | 5,2 | 4,5 | 6,3 | 6,4 | 5,8 | 6,1 |
| ESCR F50 (hours) | 141 | 141 | 120 | 159 | 168 | 96 |

### Comments on data from Examples 1 to 3

The results show that activation at a higher temperature results in higher catalyst activity, in higher resin melt index, but in slightly narrower MWD (from 22-23 to 19.5 and to 17 respectively at 550, 575 and 600°C). No significant effect on ESCR was observed. However, for a given MI2, the shear response was slightly increased. This could contribute to a higher content of long chain branching when the catalyst is activated at a higher temperature.

Increasing the target Ti-concentration increases the melt index of the obtained polyethylene, while maintaining the MWD essentially constant. However, at higher activation temperatures, this results in slightly lower ESCR, showing that the catalyst system is more sensitive to activation at higher Ti-contents.

### EXAMPLE 4

Example 4 was carried out using catalyst B as the starting material. Catalyst B was activated in a small scale activator (50 mg catalyst powder), following the above general labscale procedure.

Target titanium content of activated catalyst was 2.8 wt-%. Activation temperature was set at 550°C.

Polymerisation was carried out in bench scale following the procedure described above. Target productivity was set at about 2000 g PE/g catalyst. Temperature was varied between 96 and 100°C at varying hexene concentrations to get different densities. The data is presented in Table 2.

### EXAMPLE 5

Example 5 was carried out in a similar manner to Example 4, except that the activation temperature was set at 650°C. The data is presented in Table 2.

**Table 2**

| **EXAMPLE** | 4A | 4B | 4C | 4D | 5A | 5B |
|---|---|---|---|---|---|---|
| Catalyst type | B | B | B | B | B | B |
| Surface area starting catalyst (m²/g) | 315 | 315 | 315 | 315 | 315 | 315 |
| Pore volume (ml/g) | 1,44 | 1,44 | 1,44 | 1,44 | 1,44 | 1,44 |
| Cr-content(wt-%) | 0,51 | 0,51 | 0,51 | 0,51 | 0,51 | 0,51 |
| Ti-concentration after activation (wt-%) | 2,76 | 2,76 | 2,76 | 2,76 | 3,03 | 3,03 |
| Activation temperature (°C) | 550 | 550 | 550 | 550 | 650 | 650 |
| SA/Cr (m²/g Cr) | 61765 | 61765 | 61765 | 61765 | 61765 | 61765 |
| SA/Ti (m²/g Ti) | 11413 | 11413 | 11413 | 11413 | 10396 | 10396 |

| **Polymerisation conditions** | | | | | | |
|---|---|---|---|---|---|---|
| Ethylene (wt-%) | 6 | 6 | 6 | 6 | 6 | 6 |
| 1-hexene(wt-%) | 0 | 0,2 | 0,4 | 0,4 | 0,4 | 0,4 |
| Polymerisation temperature (°C) | 100 | 98 | 96 | 98 | 98 | 96 |
| Productivity (g/g) | 1898 | 1684 | 1943 | 1902 | 1780 | 2000 |
| Hourly productivity (g/g/h) | 2233 | 2406 | 3067 | 2783 | 3682 | 3637 |

| **Polyethylene properties** | | | | | | |
|---|---|---|---|---|---|---|
| MI2 (g/10min) | 0,30 | 0,17 | 0,18 | 0,34 | 0,56 | 0,24 |
| HLMI (g/10 min) | 28,1 | 21,8 | 23,0 | 34,0 | 52,1 | 29,5 |
| SR2 (HLMI/MI2) | 93 | 125 | 132 | 100 | 93 | 121 |
| Density (g/cm³) | 0,964 | 0,959 | 0,956 | 0,957 | 0,958 | 0,956 |

| **GPC** | | | | | | |
|---|---|---|---|---|---|---|
| Mn (kDa) | 10,4 | 10,6 | 10,6 | 10,2 | 10,7 | 11,8 |
| Mw (kDa) | 149,9 | 215,3 | 189,7 | 181,5 | 134,7 | 161,6 |
| Mz (kDa) | 1281 | 2921 | 2385 | 2512 | 1753 | 1952 |
| MWD (Mw/Mn) | 14,5 | 20,3 | 17,8 | 17,9 | 12,6 | 13,8 |
| D'(Mz/Mw) | 8,6 | 13,6 | 12,6 | 13,8 | 13 | 12,1 |
| SR2/MWD | 6,4 | 6,2 | 7,4 | 5,6 | 7,4 | 8,8 |
| ESCR F50 (hours) | 23 | 78 | 113 | 77 | 24 | 44 |
| Melt fracture onset (from Gottfert measurement) | not measured | 600 | 650 | 700 | 800 | 775 |

### Comments on data from Examples 4 and 5

The data of Examples 4 and 5 show that an increase of activation temperature has a significant effect on the MWD and on the mechanical properties of the final PE resin. At 650°C, MWD is reduced from 15-20 to 12-14 (MI2 = 0.17-0.30 dg/min), while the ESCR of polyethylene with density of 0.956-0.957 g/cm³ is divided by a number ranging from 2 to 3.

### EXAMPLE 6

A similar polymerisation was carried out using catalyst C (0.23 wt-% Cr) after titanation (3 wt-% Ti) and activation at 650°C (50 mg powder). The results are displayed in Table 3.

### COMPARATIVE EXAMPLE 7

Comparative example 7 was carried out using catalyst D (nominal Cr-content: 1 wt-%). Catalyst D was titanated (4 wt-% Ti) and further activated at 650°C in small scale activator (50 mg catalyst). It was used for copolymerisation of ethylene with 1-hexene. The results are displayed in Table 3.

### COMPARATIVE EXAMPLE 8

Catalyst D was activated in a small scale activator at 870°C without titanation step. As such it was used for polymerisation of ethylene in a bench autoclave reactor. The data is presented in Table 3.

**Table 3**

| **EXAMPLE** | 6 | 5B | 7 | 8 |
|---|---|---|---|---|
| **Catalyst type** | C | B | D | D |
| Surface area starting catalyst (m²/g) | 301 | 315 | 319 | 319 |
| Pore volume (ml/g) | 1,34 | 1,44 | 1,57 | 1,57 |
| Cr-content (wt-%) | 0,23 | 0,51 | 1,06 | 1,06 |
| Ti-concentration after activation (wt-%) | 2,78 | 3,03 | 4 | No titanation |
| Activation temperature (°C) | 650 | 650 | 650 | 870 |
| SA/Cr (m²/g Cr) | 130870 | 61765 | 30094 | 30094 |
| SA/Ti (m²/g Ti) | 10827 | 10396 | 7975 | No titanation |

| **Polymerisation conditions** | | | | |
|---|---|---|---|---|
| Reactor | slurry bench | slurry bench | slurry bench | slurry bench |
| Ethylene (wt-%) | 6 | 6 | 6 | 6 |
| 1-hexene(wt-%) | 0,4 | 0,4 | 0,5 | 0 |
| Polymerisation temperature (°C) | 98 | 96 | 98 | 100 |

| **Polyethylene properties** | | | | |
|---|---|---|---|---|
| MI2 (g/10min) | 0,29 | 0,24 | 0,32 | 0,29 |
| HLMI (g/10min) | 27,6 | 29,5 | 44,2 | 33,9 |
| SR2 (HLMI/M12) | 96 | 121 | 137 | 117 |
| Density (g/cm³) | 0,9544 | 0,9564 | 0,957 | 0,962 |

| **GPC** | | | | |
|---|---|---|---|---|
| Mn (kDa) | 13,2 | 11,8 | 12,3 | 15,4 |
| Mw (kDa) | 159,4 | 161,6 | 159,9 | 112 |
| MWD (Mw/Mn) | 12,1 | 13,8 | 13,0 | 7,3 |
| SR2/MWD | 7,9 | 8,8 | 10,5 | 16,1 |
| ESCR F50 (hours) | 58 | 44 | 24 | <24 |

### Comments on data from Example 6 and Comparative examples 7 and 8

Table 3 compares the results obtained with different chromium loadings, including the results with 0.5 wt-% chromium (example 5B). The results show that increasing the chromium concentration to 1 wt-% results in lower mechanical properties. Indeed, although MWD is similar, final ESCR is lower (24 hours vs. 44 and 54 hours). In addition, the shear ratio is higher for a similar MWD. Activation of Ti-free catalyst at a very high temperature is required to get a sufficient melt index potential that results in high shear response and a quite narrow MWD. This shows that the density of chromium sites on the surface is an important parameter and hence a higher surface area/g Cr is more favourable.

### COMPARATIVE EXAMPLE 9

Catalyst E (SA = 461 m²/g, Cr = 0.26 wt-%) was titanated as described above (Ti = 5.15 wt-%) and activated at 550°C in a small scale activator (50 mg powder). It was used for a polymerisation trial in bench scale. The data is presented in Table 4.

### COMPARATIVE EXAMPLE 10

Catalyst F (SA = 466 m²/g, Cr = 0.41 wt-%,) was titanated and then activated at 550°C in a small scale activator (50 mg powder). It was tested on bench scale for further evaluation. The data is presented in Table 4.

**Table 4**

| **EXAMPLE** | 9 | 10 |
|---|---|---|
| Catalyst type | E | F |
| Surface area starting catalyst (m²/g) | 461 | 466 |
| Pore volume (ml/g) | 1,27 | 1,29 |
| Cr-content (wt-%) | 0,26 | 0,41 |
| Ti-concentration after activation (wt-%) | 5,15 | 3,72 |
| Activation temperature (°C) | 550 | 550 |
| SA/Cr (m²/g Cr) | 177308 | 113659 |
| SA/Ti (m²/g Ti) | 8951 | 12527 |

| **Polymerisation conditions** | | |
|---|---|---|
| Ethylene (wt-%) | 6 | 6 |
| 1-hexene (wt-%) | 0,4 | 0,2 |
| Polymerisation temperature (°C) | 100 | 98 |
| Productivity (g/g) | 2047 | 1836 |
| Hourly productivity (g/g/h) | 1981 | 2623 |

| **Polyethylene properties** | | |
|---|---|---|
| MI2 (g/10min) | 0,14 | 0,059 |
| HLMI (g/10min) | 11,89 | 7,78 |
| SR2 (HLMI/M12) | 84 | 132 |
| Density (g/cm³) | 0,960 | 0,960 |

| **GPC** | | |
|---|---|---|
| Mn (kDa) | 13,0 | 11,5 |
| Mw (kDa) | 238,7 | 299,3 |
| Mz (kDa) | 2879 | 3868 |
| MWD (Mw/Mn) | 18,4 | 26,1 |
| D' (Mz/Mw) | 12,1 | 12,9 |
| SR2/MWD | 4,6 | 5,1 |
| ESCR F50 (hours) | 292 | 369 |
| Melt fracture onset (from Gottfert measurement) | 200 | 200 |

### Comments on results from Comparative examples 9 and 10

Table 2, examples 4A-4D, provide results obtained with a low surface area catalyst titanated and activated at 550°C and table 4 provides results with high surface area catalyst titanated and activated at 550°C.

The high surface area catalysts have a much lower melt index potential than the lower surface area catalysts as evidenced by the low melt index and/or the at least 4°C higher polymerisation temperature required to get somewhat acceptable melt index potential. The high molecular weight of the polymers obtained results in a very good ESCR/density compromise. However, processing is significantly more difficult as shown by the very rapid onset of melt fracture observed when using polymers obtained with such catalysts.

### EXAMPLE 11

Catalyst G was used in an industrial trial. Activation was carried out following the previous procedure described for large-scale activation. Titanium content was 3.1 wt-% and activation temperature was set at 550°C.

The titanated and activated catalyst was used in a gas phase fluidised bed reactor for co-polymerisation of ethylene and 1-hexene to produce HDPE. The throughput of the gas phase reactor was 25-30 t/hour PE.

Polymerisation was carried out at a temperature of from 108 to 112°C. Ethylene partial pressure was about 16 bars. Hydrogen H₂ (3 and 25 mol-%) and a modifier (below 0.5 ppm volume) were used to control the melt index of the final polyethylene. 1-hexene feed ratio of 0.038 to 0.500 wt-% was used.

Five lots of HDPE resins with HLMI ranging from 8.3 to 18.4 g/10 min were produced.

The fluff was stabilized with antioxidants, 500 ppm Irgafos-168 and 500 ppm Irganox-1010 prior to extrusion and pelletisation.

The products were characterised for catalyst productivity, flow properties (M12 and HLMI), density and mechanical properties (ESCR and Charpy impact resistance).

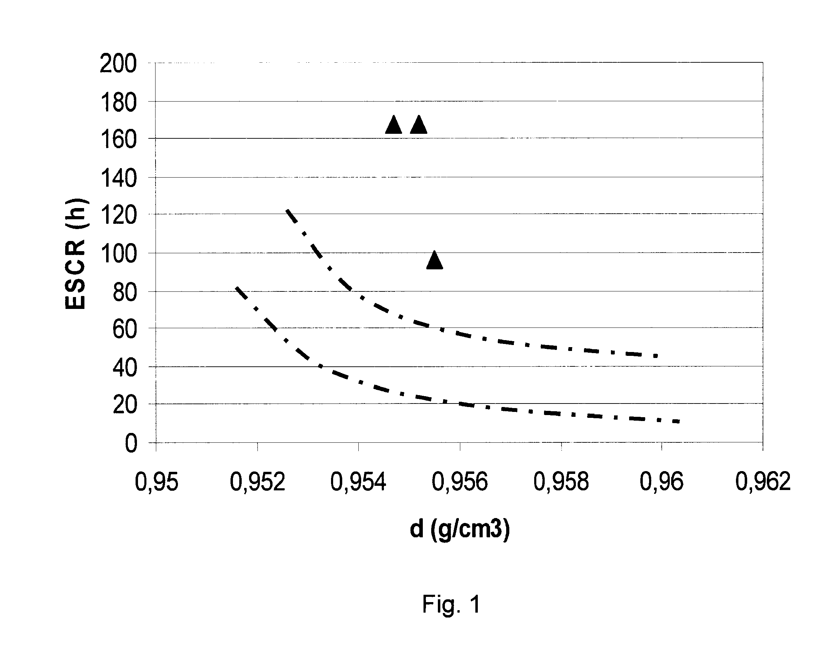

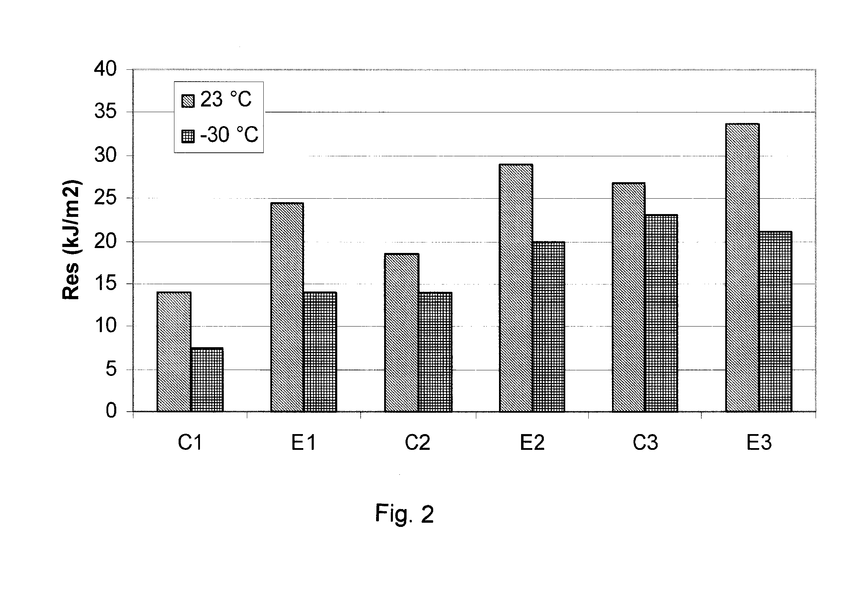

The reaction conditions and some properties of the resulting resins are presented in Table 5. Table 6 presents the ESCR and Charpy impact resistance behaviour as compared to similar commercial resins. Figures 1 and 2 show the ESCRdensity compromise and the Charpy impact resistance of the resins according to the present invention vs. commercial Cr-catalysed HDPE materials. It is noteworthy that in Example 11, reactor conditions were very stable and reactor operability was very good, with e.g. very low electrostatic build up during the gas phase polymerisation.

Figure 1 compares the ESCR-rigidity compromise of the experimental resins with commercial materials. In Figure 1, the density is given on the abscissa and the ESCR in hours on the ordinate. The upper curve shows the behaviour of second generation chromium grades, the lower curve shows the behaviour of first generation chromium grades and the triangles show the behaviour of the materials according to the present invention.

Commercial materials are divided between 1^{st} generation HDPE resins and 2^{nd} generation HDPE resins. First generation HDPE resins are known for very easy processability but limited mechanical properties. Representative materials are for instance former Finathene® 5502 and 47100 grades or 5502 grade presently sold by TOTAL Petrochemicals. Second generation HDPE resins are known for improved mechanical properties (i.e. a better density/rigidity - ESCR compromise). Typical resins include e.g. HDPE materials sold under the names 53140, 53080 and 49080 (sold by TOTAL Petrochemicals), or sold under the names Stamylan ®8621 (SABIC) or Polimeri® BC86 (Polimeri Europa).

Figure 1 shows that a catalyst according to the present invention is able to produce polymers having similar or better density-ESCR compromise than previously existing Cr-HDPE resins.

Table 6 and Figure 2 compare the impact resistance of the experimental resins with those of commercial semi-high molecular weight materials. E1 stands for Example 11 B, E2 for Example 11E and E3 for Example 11 D. C1 stands for a commercial resin 2003SN53, C2 for a commercial resin 53410 and C3 for a commercial resin 53080, all sold by TOTAL Petrochemicals.

The data shows that at low temperature, impact resistance is as good as that of the comparison materials with a lower density. At +23°C, the Charpy impact resistance of the experimental resins is significantly improved (+30 %).

**Table 5**

| **EXAMPLE** | 11A | 11B | 11C | 11D | 11E |
|---|---|---|---|---|---|
| **Polymerisation conditions** | | | | | |
| Temperature (°C) | 112 | 112 | 112 | 112 | 108,5 |
| C6/C2 in gas flow (%) | 0,043 | 0,043 | 0,043 | 0,043 | 0,14 |
| H2/C2 in gas flow (%) | 0,2 | 0.12-0.19 (0.16) | 0,03 | 0,055 | 0,05 |

| **Polyethylene properties** | | | | | |
|---|---|---|---|---|---|
| HLMI (dg/min) | 18,4 | 14,3 | 13,0 | 10,2 | 8,3 |
| M12 (dg/min) | 0,25 | 0,20 | 0,16 | 0,14 | not measurable |
| SR2 (HLMI/MI2) | 74 | 72 | 81 | 73 | |
| Density (g/cm³) | 0,955 | 0,956 | 0,955 | 0,955 | 0,952 |

| **GPC** | | | | | |
|---|---|---|---|---|---|
| Mn (kDa) | 14,4 | 15,4 | 15,2 | 17,0 | 17,2 |
| Mw (kDa) | 234,4 | 238,9 | 231,8 | 235,0 | 239,3 |
| Mz (kDa) | 3698 | 2975 | 2962 | 2272 | 2528 |
| MWD (Mw/Mn) | 16,3 | 15,5 | 15,3 | 13,8 | 13,9 |
| D' (Mz/Mw) | 15,8 | 12,5 | 12,8 | 9,7 | 10,6 |
| SR2/MWD | 4,5 | 4,6 | 5,3 | 5,3 | |
| ESCR F50 (hours) | 96 | 96 | 168 | 168 | 528 |

**Table 6**

| **EXAMPLE** | 11A | 11B | 11C | 11D | 11E | Reference commercial grades | | |
|---|---|---|---|---|---|---|---|---|
| | | | | | | 53140 | 53080 | 49080 |
| HLMI (dg/min) | 18,4 | 14,3 | 13,0 | 10,2 | 8,3 | 14,0 | 8,0 | 8,0 |
| M12 (dg/min) | 0,25 | 0,20 | 0,16 | 0,14 | not measurable | | | |
| SR2 (HLMI/MI2) | 74 | 72 | 81 | 73 | | | | |
| Density (g/cm³) | 0,955 | 0,956 | 0,955 | 0,955 | 0,952 | 0,953 | 0,953 | 0,949 |

| **GPC** | | | | | | | | |
|---|---|---|---|---|---|---|---|---|
| Mn (kDa) | 14,4 | 15,4 | 15,2 | 17,0 | 17,2 | 18,2 | 19,1 | 17,3 |
| Mw (kDa) | 234,4 | 238,9 | 231,8 | 235,0 | 239,3 | 201,9 | 225,1 | 253,2 |
| Mz(kDa) | 3698 | 2975 | 2962 | 2272 | 2528 | 1702 | 2261 | 2658 |
| MWD (Mw/Mn) | 16,3 | 15,5 | 15,3 | 13,8 | 13,9 | 11,1 | 11,8 | 14,7 |
| D'(Mz/Mw) | 15,8 | 12,5 | 12,8 | 9,7 | 10,6 | 11,0 | 10,1 | 10,6 |
| SR2/MWD | 4,5 | 4,6 | 5,3 | 5,3 | | | | |

| **CHARPY_ISO** | | | | | | | | |
|---|---|---|---|---|---|---|---|---|
| ***Temperature* = +23°C** | | | | | | | | |
| Average Resilience (kJ/m2) | 17,6 | 24,6 | 24,2 | 33,6 | 29,1 | 18,5 | 26,8 | 21,8 |
| Resilience_StdDev (kJ/m2) | 0,46 | 0,80 | 0,79 | 1,87 | 1,02 | | | |

| ***Temperature =-30°C*** | | | | | | | | |
|---|---|---|---|---|---|---|---|---|
| Average Resilience (kJ/m2) | 8,4 | 14,0 | 15,3 | 21,0 | 20,2 | 14,0 | 23,0 | 9,0 |
| Resilience_StdDev (kJ/m2) | 0,42 | 0,69 | 0,81 | 1,22 | 1,05 | | | |

### EXAMPLE 12

Catalyst H was activated following the large scale activation procedure. Target titanium content was set at 4 wt-% and activation temperature at 650°C (surface area/titanium=7525 m²/g Ti). The activated catalyst was used for the production of a medium density film grade polyethylene. The polymerisation conditions are presented in Table 7.

The obtained resin (d=0.944 g/cm³) was blown into a film.

**Table 7**

| **EXAMPLE** | 12 |
|---|---|
| **Polymerisation conditions** | |
| Temperature (°C) | 103 |
| C6/C2 in gas flow (%) | 0,78 |
| H2/C2 in gas flow (%) | 0,03 |

| **Polyethylene properties** | |
|---|---|
| HLMI (dg/min) | 16,0 |
| MI2 (dg/min) | 0,23 |
| SR2 (HLMI/MI2) | 70 |
| Density (g/cm³) | 0,944 |

## Claims

1. A process for preparing a supported chromium-based catalyst for the production of polyethylene comprising the steps of
a) providing a silica-based support having a specific surface area of at least 250 m²/g and of less than 400 m²/g;
b) depositing a chromium compound on the support to form a chromium-based catalyst, provided that the ratio of the specific surface area of the support to chromium is at least 50000 m²/g Cr;
c) dehydrating the product of step b) to remove physically adsorbed water by heating at a temperature of at least 250°C in an atmosphere of dry and inert gas; and
d) titanating the product of step c) at a temperature of at least 250°C in an atmosphere of dry and inert gas containing at least one titanium compound of the general formula selected from RₙTi(OR')ₘ, (RO)ₙTi(OR')ₘ and mixtures thereof, wherein R and R' are the same or different hydrocarbyl groups containing from 1 to 12 carbon atoms, and wherein n is 0 to 3, m is 1 to 4 and m+n equals 4, to form a titanated chromium-based catalyst having a ratio of specific surface area of the support to titanium content of the titanated catalyst ranging from 5000 to 20000 m²/g Ti.

2. A process according to claim 1, **characterised in that** it further comprises a step e) of activating the titanated chromium-based catalyst of step d) at a temperature of from 500 to 700°C.

3. A process according to claim 1 or 2, **characterised in that** the support has a specific surface area of from 280 to 380 m²/g.

4. A process according to claim 3, **characterised in that** the support has a specific surface area of from 280 to 350 m²/g.

5. A process according to any one of the foregoing claims, wherein the at least one titanium compound is selected from the group consisting of tetraalkoxides of titanium having the general formula Ti(OR')₄ wherein each R' is the same or different and can be an alkyl or cycloalkyl group each having from 3 to 5 carbon atoms, and mixtures thereof.

6. A process according to any one of the foregoing claims, wherein the ratio of the specific surface area of the support to titanium content of the titanated catalyst is from 6500 to 15000 m²/g Ti.

7. A process according to any of the foregoing claims, wherein the ratio of the specific surface area of the support to chromium content ranges from 50000 to 200000 m²/g Cr.

8. A chromium-based catalyst for the production of polyethylene, comprising a silica-based support having a specific surface area of at least 250 m²/g and of less than 400 m²/g, a chromium compound deposited on the support, a ratio of the specific surface area of the support to chromium content of the catalyst of at least 50000 m²/g, and a titanium compound deposited on the support to obtain a ratio of the specific surface area of the support to titanium content of the catalyst of 5000 to 20000 m²/g Ti.

9. A catalyst according to claim 8, wherein the support has a specific surface area of from 280 to 400 m²/g.

10. A catalyst according to claim 9, wherein the support has a specific surface area of from 280 to 350 m²/g.

11. A catalyst according to any one of claims 8 to 10, wherein the ratio of the specific surface area of the support titanium content of said titanated catalyst is ranging between 6500 to 15000 m²/g Ti, based on the weight of the titanated catalyst.

12. A method for preparing polyethylene by polymerising ethylene, or copolymerising ethylene and an alpha-olefinic comonomer comprising 3 to 10 carbon atoms, in the presence of a chromium-based catalyst comprising a silica-based support having a specific surface area of at least 250 m²/g and lower than 400 m²/g, a chromium compound deposited on the support, a ratio of the specific surface area of the support to chromium content of the catalyst of at least 50000 m²/g, and a titanium compound deposited on the support to obtain a ratio of the specific surface area of the support to the titanium content of the titanated catalyst of 5000 to 20000 m²/g Ti.

13. A method according to claim 12, wherein the polymerisation is carried out in a gas phase process.

14. An ethylene homopolymer or a copolymer of ethylene and an alpha-olefinic comonomer comprising 3 to 10 carbon atoms, obtainable according to the method of claim 12 or claim 13.

15. Use of a chromium-based catalyst according to any of the claims 8 to 11, for producing a polyethylene having high environmental stress crack resistance and low melt fracture index, by polymerising ethylene, or copolymerising ethylene and an alpha-olefinic comonomer comprising 3 to 10 carbon atoms.

16. Use of a chromium-based catalyst according to any of the claims 8 to 11, for producing a semi-high molecular weight polyethylene, with an HLMI ranging from 5 to 12 g/10 min, by polymerising ethylene, or copolymerising ethylene and an alpha-olefinic comonomer comprising 3 to 10 carbon atoms.

17. Use of a chromium-based catalyst according to any of the claims 8 to 11 for increasing the impact resistance of moulded articles made from high density polyethylene resins obtained by polymerising ethylene, or copolymerising ethylene and an alpha-olefin comonomer comprising 3 to 10 carbon atoms, in the presence of said catalyst.

18. A blow moulded article manufactured from a polyethylene, obtainable by polymerising ethylene or copolymerising ethylene and an alpha-olefinic comonomer comprising 3 to 10 carbon atoms, in the presence of a chromium-based catalyst according to any of the claims 8 to 11.

19. A film manufactured from a polyethylene, obtainable by polymerising ethylene or copolymerising ethylene and an alpha-olefinic comonomer comprising 3 to 10 carbon atoms, in the presence of a chromium-based catalyst according to any of the claims 8 to 11.
